# EUROPEAN PATENT APPLICATION

(11) **EP 3 836 436 A1**
(43) Date of publication of application: **16.06.2021**
(21) Application number: 19848723.3
(22) Date of filing: 02.07.2019
(51) Int. Cl.: H04J 3/16, H04Q 11/00

(54) **SERVICE SWITCHING METHOD, DEVICE AND STORAGE MEDIUM**

(30) Priority: 10.08.2018 CN 201810910965
(71) Applicant: ZTE Corporation, Shenzhen, Guangdong 518057 (CN)
(72) Inventor: RUAN, Zhiming, Guangdong 518057 (CN)
(74) Representative: Petraz, Gilberto Luigi
(86) International application number: PCT/CN2019/094336
(87) International publication number: WO 2020/029722

(57) **Abstract**

Provided are a service switching method, a device and a storage medium, wherein the method includes: receiving, by a first service board, an operation instruction sent by a management plane; and sending, by the first service board, a control signaling of a G.HAO protocol to a second service board according to the operation instruction.

## Description

### Cross-reference to Related Applications

This disclosure claims the priority to Chinese patent application CN 201810910965.2, entitled "SERVICE SWITCHING METHOD, DEVICE AND STORAGE MEDIUM" and filed on August 10, 2018, the entirety of which is incorporated herein by reference.

### Field of the Invention

The embodiments of the present disclosure relate to the technical field of communication technology, and in particular , but not limited to a service switching method and a service switching device, and a storage medium .

### Background of the Invention

At present, an increasing number of packet services are applied in an operator's network transmission, and those packet services in some certain mobile application scenarios, such as mobile payment, smart driving and the like, have high requirements on real-time and reliability of data transmission.

However, most of the operator's existing packet-switching-technology-based optical transport network, OTN, equipment cannot support, with all paths, a protocol regarding hitless adjustment of Flexible rate Optical Digital Unit (Generic Framing Procedure) (Hitless Adjustment of ODUflex (GFP), or G.HAO) in the International Telecommunication Union Telecommunication Standardization Sector (ITU-T), namely G.7044 protocol. If the G.HAO protocol is to be fully supported using the existing approaches, the operator may need to redeployed an OTN service board that supports the G.HAO protocol, which will significantly increase operating cost of the operator.

### Summary of the Invention

Example Embodiments of the present disclosure provide a service switching method, device, and storage medium.

The example embodiments of the present disclosure is implemented as follows:
In a first aspect, an embodiment of the present disclosure provides a service switching method, including steps of:
receiving, by a first service board, an operation instruction sent by a management platform;
sending, by the first service board, a control signaling of G.HAO protocol to a second service board according to the operation instruction.

In a second aspect, an example embodiment of the present disclosure provides a service switching device, including:
a first service board, configured to receive an operation instruction sent by a management platform, and further configured to send a control signaling of G.HAO protocol to a second service board according to the operation instruction.

In a third aspect, an example embodiment of the present disclosure provides a computer-readable storage medium in which a computer program is stored, wherein the computer program is configured to implement, when executed, steps of the above-mentioned service switching method.

The example embodiments of the present disclosure provide a service switching method, apparatus and storage medium, wherein the method includes: receiving, by a first service board, an operation instruction sent by a management platform; sending, by the first service board, a control signaling of G.HAO protocol to a second service board according to the operation instruction. In this way, a smooth transition to the G.HAO protocol can be achieved using those existing packet OTN equipment.

### Brief Description of the Drawings

Fig. 1 is a schematic flowchart of a service switching method according to example embodiment one of the present disclosure;
Fig. 2A is a schematic flowchart of a service switching method according to example embodiment two of the present disclosure;
Fig. 2B is a schematic flowchart of another service switching method according to example embodiment two of the present disclosure;
Fig. 3A is a schematic flowchart of a service switching method according to example embodiment three of the present disclosure;
Fig. 3B is a schematic flowchart of another service switching method according to example embodiment three of the present disclosure;
Fig. 3C is a schematic flowchart of a service switching method according to example embodiment four of the present disclosure;
Fig. 4 is a schematic flowchart of a service switching method according to example embodiment five of the present disclosure;
Fig. 5A is a schematic diagram of the structure of function composition modules which implement a G.HAO protocol interaction method according to example embodiment six of the present disclosure;
Fig. 5B is a schematic diagram showing service adjustment interaction according to example embodiment six of the present disclosure;
Fig. 5C is a schematic diagram showing an adjustment process which enables timeslot increasing of an ODUflex (GFP) service according to example embodiment seven of the present disclosure;
Fig. 6 is a schematic diagram showing an adjustment process which enables timeslot decreasing of an ODUflex (GFP) service according to example embodiment eight of the present disclosure;
Fig. 7 is a schematic flowchart showing a process which enables exception handling of an ODUflex (GFP) service according to example embodiment nine of the present disclosure;
Fig. 8 is a schematic diagram of the structure of function composition modules which implement a G.HAO protocol interaction method according to example embodiment ten of the present disclosure;
Fig. 9 is a schematic diagram showing an adjustment process which enables timeslot increasing of an ODUflex (GFP) service according to example embodiment eleven of the present disclosure;
Fig. 10 is a schematic diagram of the structure of function composition modules which implement a G.HAO protocol interaction method according to example embodiment twelve of the present disclosure;
Fig. 11 is a schematic diagram showing an adjustment process which enables timeslot increasing of an ODUflex (GFP) service according to example embodiment thirteen of the present disclosure; and
Fig. 12 is a schematic diagram of the composition structure of a service switching apparatus according to example embodiment fourteen of the present disclosure.

### Detailed Description of the Embodiments

A method for acquiring the device-based information provided by the present disclosure will be described in detail below with reference to the accompanying drawings and example embodiments of the present disclosure.

### Example Embodiment One

An embodiment of the present disclosure provides a service switching method. The method is configured to implement, according to the G.HAO protocol, hitless service adjustment onto an ODUflex (GFP) service in OTN equipment, and is generally applied to the OTN equipment of a packet switching system that is required to support hitless adjustment on an ODUflex service.

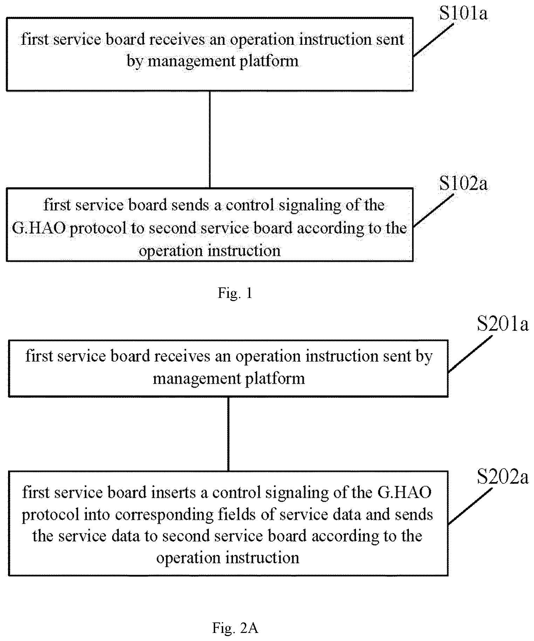

Fig. 1 is a schematic flowchart of a service switching method according to Example Embodiment one of the present disclosure. As shown in Fig. 1, the method includes the following steps.

In step S101a, a first service board receives an operation instruction sent by a management platform.

Here, the management platform is responsible for configuration of an entire system, collection and reporting of system data, and operations of terminating or starting a program in response to user input or other application messages. The operation instruction may be an operation instruction of increasing timeslot or an operation instruction of decreasing timeslot.

In step S102a, the first service board sends a control signaling of the G.HAO protocol to a second service board according to the operation instruction.

In the example embodiment of the present disclosure, the first service board may directly send the control signaling of the G.HAO protocol to the second service board, or may send the control signaling of the G.HAO protocol to the second service board via a transfer device according to the operation instruction.

In this case, the transfer device is configured to forward a control signaling of the G.HAO protocol. The control signaling of the G.HAO protocol may be a control signaling which adjusts a link connection resize (LCR) protocol and a bandwidth resize (BWR) protocol in the G.HAO protocol.

In the example embodiment of the present disclosure, an example is taken that the first service board serves as a service board A and the second service board serves as a service board B. After the service board A receives an operation instruction sent by the management platform, if the service board A is configured to directly send the LCR protocol or the BWR protocol to the service board B according to the operation instruction, then the service board B directly returns a corresponding response message to the service board A after receiving the LCR protocol or the BWR protocol; if the service board A is configured to send the LCR protocol or the BWR protocol to the service board B via a transfer device according to the operation instruction, then the service board B returns a corresponding response message to the service board A via the transfer device after receiving the LCR protocol or the BWR protocol. In this example embodiment, the transfer device is configured to forward a control signaling of the G.HAO protocol. The transfer device may be one module or a collection of multiple modules. Any device(s) or module(s) can be called a transfer device as long as forwarding of the control signaling of the G.HAO protocol can be implemented by the device(s) or the module(s). In the example embodiment of the present disclosure, the transfer device is OTN equipment.

By using OTN equipment in the example embodiment of the present disclosure, either in-band transmission or out-of-band transmission is enabled, the G.HAO protocol can be supported with all paths without redeploying new OTN equipment supporting the G.HAO protocol by an operator, and flexible scheduling of an ODUflex (GFP) service can be achieved in the OTN equipment.

### Example Embodiment Two

An example embodiment of the present disclosure provides a service switching method. Fig. 2A is a schematic flowchart of the service switching method according to Example Embodiment two of the present disclosure. As shown in Fig. 2A, the method includes the following steps.

In step S201a, a first service board receives an operation instruction sent by a management platform.

Here, the management platform is responsible for configuration of the entire system, collection and reporting of system data, and operations of terminating or starting a program in response to user input or other application messages. The operation instruction may be an operation instruction of increasing timeslot or an operation instruction of decreasing timeslot.

In step S202a, the first service board inserts a control signaling of the G.HAO protocol into corresponding fields of service data, and sends the service data to a second service board according to the operation instruction.

Here, the first service board may insert the control signaling of the G.HAO protocol into overhead fields of the service data, and transmit the control signaling of the G.HAO protocol together with the service data to the second service board. The overhead fields are fields that can carry the control signaling, such as null bytes in a certain frame in an array or other fields for carrying the control signaling.

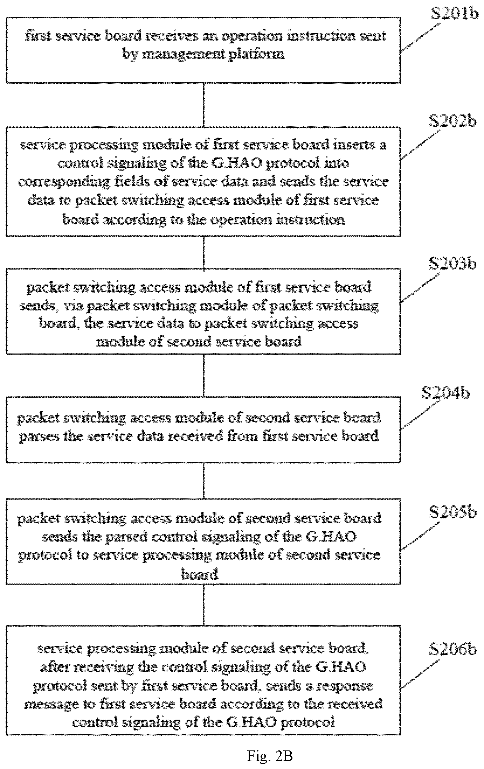

The example embodiment of the present disclosure provides another service switching method, wherein a service board includes a service processing module and a packet switching access module connected to the service processing module. Fig. 2B is a schematic flowchart of another service switching method according to the example embodiment two of the present disclosure. As shown in Fig. 2B, the method includes the following steps.

In step S201b, a service processing module of the first service board receives an operation instruction sent by the management platform.

In step S202b, the service processing module of the first service board inserts a control signaling of the G.HAO protocol into corresponding fields of service data, and sends the service data to a packet switching access module of the first service board according to the operation instruction.

In step S203b, the packet switching access module of the first service board sends, via a packet switching module of a packet switching board, the service data to a packet switching access module of the second service board.

In step S204b, the packet switching access module of the second service board parses the service data received from the first service board.

In step S205b, the packet switching access module of the second service board sends the parsed control signaling of the G.HAO protocol to a service processing module of the second service board.

In step S206b, the service processing module of the second service board, after receiving the control signaling of the G.HAO protocol sent by the first service board, sends a response message to the first service board according to the received control signaling of the G.HAO protocol.

In this example embodiment, ends of the packet switching module are respectively connected to the packet switching access module of the first service board and the packet switching access module of the second service boards.

In the example embodiment of the present disclosure, a process that the second service board returns a response message to the first service board is provided as follows. The service processing module of the second service board sends the response message to the packet switching access module of the second service board, and the packet switching access module of the second service board sends, via the packet switching module, the response message to the packet switching access module of the first service board, and the packet switching access module of the first service board sends the response message to the service processing module of the first service board. In this way, a round process with sending and response of the control signaling of the G.HAO protocol is implemented.

In the example embodiment of the present disclosure, by using OTN equipment without adding additional equipment, processing of the control signaling of the G.HAO protocol is achieved, in-band transmission is enabled, the G.HAO protocol can be supported with all paths without redeploying new OTN equipment supporting the G.HAO protocol by an operator, and flexible scheduling of an ODUflex (GFP) service can be achieved in the OTN equipment.

### Example Embodiment Three

In an example embodiment of the present disclosure, a first service board receives an operation instruction sent by the management platform, and sends, according to the operation instruction, a control signaling of the G.HAO protocol to a second service board via a transfer device which is configured to forward the control signaling of the G.HAO protocol.

Here, the transfer device is configured to forward the control signaling of the G.HAO protocol, and may be one module or a collection of multiple modules. Any device(s) or module(s) can be called a transfer device as long as forwarding of the control signaling of the G.HAO protocol can be implemented.

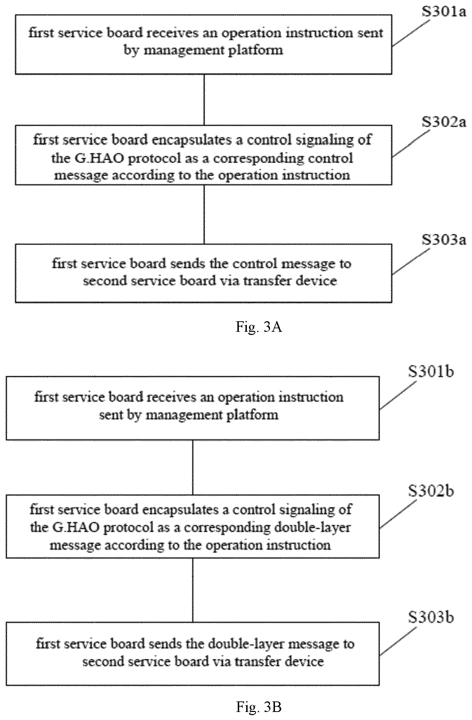

An example embodiment of the present disclosure provides a service switching method. Fig. 3A is a schematic flowchart of the service switching method according to Example Embodiment three of the present disclosure. As shown in Fig. 3A, the method includes the following steps.

In step S301a, the first service board receives an operation instruction sent by the management platform.

In step S302a, the first service board encapsulates a control signaling of the G.HAO protocol as a corresponding control message according to the operation instruction.

In step S303a, the first service board sends the control message to the second service board via the transfer device.

In the example embodiment of the present disclosure, an ODUflex (GFP) service increasing timeslot is taken as an example with an assumption that the first service board serves as a service board A and the second service board serves as a service board B. When expansion of service is required by a customer, the management platform sends an timeslot increasing command to the service board A and the service board B. After receiving the timeslot increasing command sent from the management platform, the service board A encapsulates the control signaling of the G.HAO protocol as a corresponding control message and sends the control message to the second service board via the transfer device according to the received timeslot increasing command. In this case, the control message is matched with the transfer device.

The example embodiment of the present disclosure provides another service switching method. Fig. 3B is a schematic flowchart of another service switching method according to example Embodiment three of the present disclosure. As shown in Fig. 3B, the method includes the following steps.

In step S301b, the first service board receives an operation instruction sent by the management platform.

In step S302b, the first service board encapsulates a control signaling of the G.HAO protocol as a corresponding double-layer message according to the operation instruction.

In step S303b, the first service board sends the double-layer message to the second service board via the transfer device.

In the example embodiment of the present disclosure, timeslot increasing of an ODUflex (GFP) service is still taken as an example. It is assumed that the first service board serves as a service board A and the second service board serves as a service board B. When expansion of service is required by a customer, the management platform sends an timeslot increasing command to the service board A and the service board B. After receiving the timeslot increasing command sent from the management platform, the service board A encapsulates the control signaling of the G.HAO protocol as a corresponding double-layer message and sends the double-layer message to the second service board via the transfer device according to the received timeslot increasing command. In this case, the double-layer message is matched with the transfer device.

In the example embodiment of the present disclosure, by using existing OTN equipment, processing of the control signaling of the G.HAO protocol is achieved, out-of-band transmission is enabled, the G.HAO protocol can be supported with all paths without redeploying new OTN equipment supporting the G.HAO protocol by an operator, and flexible scheduling of an ODUflex (GFP) service can be achieved in the OTN equipment.

### Example Embodiment Four

In an example embodiment of the present disclosure, a service board includes a service processing module, a packet switching access module and a programmable logic module. The service processing module is connected to the packet switching access module, and ends of the programmable logic module are respectively connected to the service processing module and the packet switching access module.

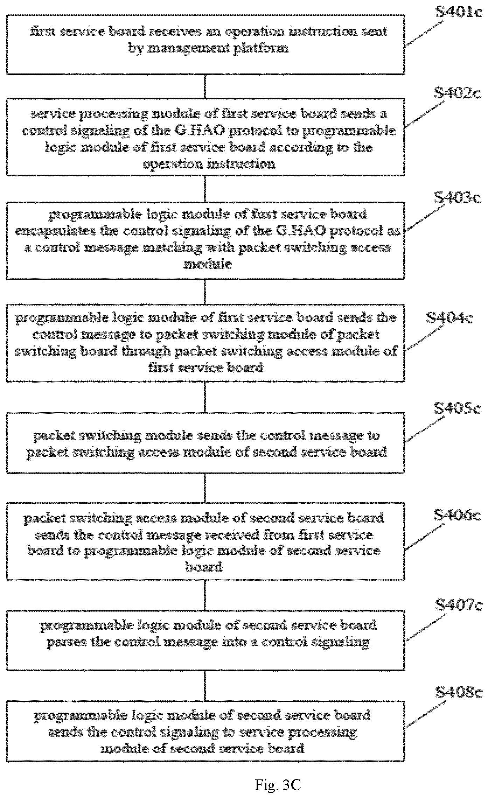

An example embodiment of the present disclosure provides a service switching method. Fig. 3C is a schematic flowchart of the service switching according to Example Embodiment four of the present disclosure. As shown in Fig. 3C, the method includes the following steps.

In step S401c, a service processing module of the first service board receives an operation instruction sent by the management platform.

In step S402c, the service processing module of the first service board sends a control signaling of the G.HAO protocol to a programmable logic module of the first service board according to the operation instruction.

In step S403c, the programmable logic module of the first service board encapsulates the control signaling of the G.HAO protocol as a control message matching with a packet switching access module.

In step S404c, the programmable logic module of the first service board sends the control message to a packet switching module of a packet switching board through the packet switching access module of the first service board.

In step S405c, the packet switching module sends the control message to a packet switching access module of a second service board.

In step S406c, the packet switching access module of the second service board sends the control message received from the first service board to a programmable logic module of the second service board.

In step S407c, the programmable logic module of the second service board parses the control message into a control signaling.

In step S408c, the programmable logic module of the second service board sends the control signaling to a service processing module of the second service board.

In this case, ends of the packet switching module are respectively connected to the packet switching access module of the first service board and the packet switching access module of the second service boards.

Here, an example is taken with the first service board serving as a service board A as well as with the LCR protocol being used. After a service processing module Framer (Framer A) of the service board A at a service sending end receives an operation instruction from the management platform, the Framer_A of the service board A starts to execute the LCR protocol and sets a state of the LCR protocol as *start,* and informs a programmable logic module FPGA (FPGA A) of the service board A by writing a register. The FPGA A reads a *start* identifier of the LCR protocol from the Framer_A and determines that the LCR protocol has been run. The FPGA_A of the service board A at the service sending end reads the register of the Framer_A and finds that the LCR protocol of the G.HAO protocol has been run, it then encapsulates the LCR protocol message as a corresponding control message. The FPGA_A sends the encapsulated control message to a packet switching access module FAP (FAP A) of the service board A, and then delivers the encapsulated control message to a packet switching module (FE) of a packet switching board through a management channel of a packet switching system between FAP A and the FE. The encapsulated control message is forwarded to a packet switching access module (FAP_B) of a service board B at a receiving end through a management channel of a packet switching system between the FAP_B on the service board B and the FE. The FAP_B sends the control message to a programmable logic module FPGA (FPGA_B) on the service board B. The FPGA_B parses the control message into a control signaling, and sends the control signaling to a service processing module Framer (Framer B) of the service board B.

In the example embodiment of the present disclosure, by using existing OTN equipment, processing of the control signaling of the G.HAO protocol is achieved, out-of-band transmission is enabled, the G.HAO protocol can be supported with all paths without redeploying new OTN equipment supporting the G.HAO protocol by an operator, and flexible scheduling of an ODUflex (GFP) service can be achieved in the OTN equipment.

### Example Embodiment Five

In an example embodiment of the present disclosure, a first service board receives an operation instruction sent by the management platform, and then sends a control signaling of the G.HAO protocol to a second service board via a transfer device according to the operation instruction. In this case, the transfer device is configured to forward the control signaling of the G.HAO protocol.

In the example embodiment of the present disclosure, a service board includes a service processing module, a packet switching access module, a double-layer message switching module, and a central processing unit. The service processing module is connected to the packet switching access module, and ends of the central processing unit are respectively connected to the service processing module and the double-layer message switching module.

In other example embodiments, the service board includes a service processing module, a packet switching access module, a double-layer message switching module, and a central processing unit. The service processing module is connected to the packet switching access module, and ends of the central processing unit are respectively connected to the service processing module and the double-layer message switching module.

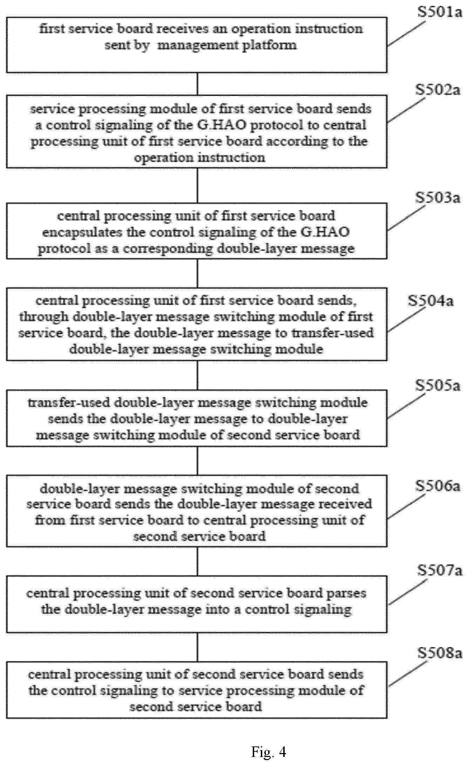

An example embodiment of the present disclosure provides another service switching method. Fig. 4 is a schematic flowchart of the service switching method according to Example Embodiment five of the present disclosure. As shown in Fig. 4, the method includes the following steps.

In step S501a, a service processing module of the first service board receives an operation instruction sent by the management platform.

In step S502a, the service processing module of the first service board sends a control signaling of the G.HAO protocol to a central processing unit of the first service board according to the operation instruction.

In step S503a, the central processing unit of the first service board encapsulates the control signaling of the G.HAO protocol as a corresponding double-layer message.

In step S504a, the central processing unit of the first service board sends, through a double-layer message switching module of the first service board, the double-layer message to a transfer-used double-layer message switching module.

In step S505a, the transfer-used double-layer message switching module sends the double-layer message to a double-layer message switching module of the second service board.

In step S506a, the double-layer message switching module of the second service board sends the double-layer message received from the first service board to a central processing unit of the second service board.

In step S507a, the central processing unit of the second service board parses the double-layer message into a control signaling.

In step S508a, the central processing unit of the second service board sends the control signaling to a service processing module of the second service board.

In this case, ends of the transfer-used double-layer message switching module are respectively connected to the double-layer message switching module of the first service board and the double-layer message switching module of the second service board.

Here again, an example is taken with the first service board serving as a service board A as well as with the LCR protocol being used. After a service processing module Framer (Framer A) of the service board A at a service sending end receives an operation instruction from the management platform, the Framer_A of the service board A sends a control signaling of the G.HAO protocol to a central processing unit (CPU_A) of the service board A according to the operation instruction. The CPU_A encapsulates the control signaling of the G.HAO protocol as a corresponding double-layer message and sends the double-layer message to a transfer-used double-layer message switching module (L2 SWITCH) through a double-layer message switching module (L2 SWITCH A) of the service board A. The L2 SWITCH sends the double-layer message to a double-layer message switching module (L2 SWITCH_B) of a service board B. The L2 SWITCH_B then sends the double-layer message to a central processing unit (CPU_B) of the service board B. The CPU B parses the double-layer message into a control signaling, and sends the control signaling to a service processing module (Framer B) of the service board B.

In the example embodiment of the present disclosure, by using existing OTN equipment, processing of the control signaling of the G.HAO protocol is achieved, out-of-band transmission is enabled, the G.HAO protocol can be supported with all paths without redeploying new OTN equipment supporting the G.HAO protocol by an operator, and flexible scheduling of an ODUflex (GFP) service can be achieved in the OTN equipment.

### Example Embodiment Six

An increasing number of packet services are applied in an operator's network transmission, and those packet services in some certain mobile application scenarios (e.g., mobile payment, smart driving, etc.) have high requirements on real-time and reliability of data transmission. Thus, a method that can achieve flexible scheduling of an ODUflex (GFP) service in the OTN transmission equipment is demanded. The G.HAO protocol (ITU-T G.7044) is a method that can meet this demand.

An example embodiment of the present disclosure relates to a method that implements hitless adjustment on a packet-service-based Flexible rate Optical Digital Unit (Generic Framing Procedure) (ODUflex (GFP)) service in OTN equipment of the packet switching technology according to the G.HAO (G.7044) protocol, and a method that implements smooth transition towards the G.HAO protocol using the existing packet OTN equipment and is applicable to the OTN equipment of a packet switching system which is required to support hitless adjustment of ODUflex (GFP).

An example embodiment of the present disclosure provides a method that can realize the function of the G.HAO protocol by upgrading a software version on the OTN equipment of the packet switching technology.

An example embodiment of the present disclosure provides a G.HAO protocol interaction method. Functional modules of the method include an OTN service processing module, a packet switching access module, a packet switching processing module and a programmable logic module.

In the example embodiment of the present disclosure, the OTN service processing module (Framer) is an executor that implements related content of the G.HAO protocol. It should be noted that implementation of the method according to the embodiment of the present disclosure relies on that the OTN service processing module supports the G.HAO protocol.

The packet switching access module (also referred to as Fabric Access Point, FAP) not only performs adaptation and scheduling of the OTN packet data that has been processed by the OTN service module, but also provides a transmission channel for a control information of the G.HAO protocol as needed in the embodiment of the present disclosure.

The packet switching module (also referred to as Fabric Element, FE) implements switching and forwarding of OTN service packet data and the control information of the G.HAO protocol.

The programmable logic module (also referred to as Field Programmable Gate Array, FPGA) performs reading and writing of an execution state of the G.HAO protocol in the OTN service processing module, and encapsulates the state into a message format that is supported by the FAP and transmits it to a service board of the opposite end through the FAP and the FE. The FPGA realizes the functions of information conversion, auxiliary control and transmission of the G.HAO protocol.

The method in the example embodiment of the present disclosure is deployed in the OTN equipment that is based on a packet switching system, and is capable of hitless adjustment of the ODUflex (GFP) service.

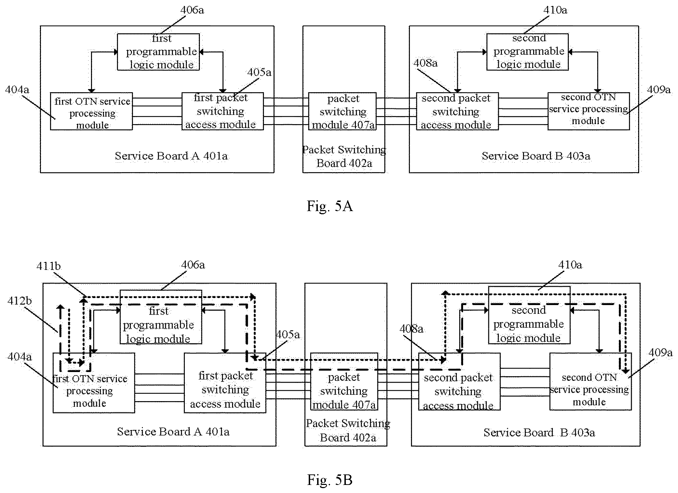

Fig. 5A is a schematic diagram of the structure of function composition modules which implement the G.HAO protocol interaction method according to Example Embodiment six of the present disclosure. As shown in Fig. 5A, the structure of the composition modules includes a service board A 401a, a packet switching board 402a, and a service board B 403a.

In the embodiment of the present disclosure, the service board A 401a includes a first OTN service processing module (Framer_1) 404a, a first packet switching access module (FAP_1) 405a, and a first programmable logic module (FPGA 1) 406a. In this case, ends of the Framer_1 404a are respectively connected to the FPGA_1 406a and the FAP_1 405a, ends of the FPGA_1 406a are respectively connected to the Framer_1 404a and the FAP_1 405a, and ends of the FAP_1 405a are respectively connected to the Framer_1 404a and a packet switching module (FE) 407a of the packet switching board 402a. Connection between the Framer_1 404a and the FAP_1 405a is used for service data transmission, and connection between the FAP_1 405a and the FE 407a is applicable for both service data transmission and control signaling transmission.

The packet switching board 402a includes the FE 407a, ends of which are respectively connected to the FAP_1 405a in the service board A 401a and a second packet switching access module (FAP 2) 408a in the service board B 402a.

The service board B 403a includes a second OTN service processing module (Framer_2) 409a, the FAP_2 408a, and a second programmable logic module (FPGA 2) 410a. In this case, ends of the Framer_2 409a are respectively connected to the FAP_2 408a and the FPGA_2 410a, ends of the FPGA_2 409a are respectively connected to the Framer_2 409a and the FAP _2 408a, and ends of the FAP_2 408a are respectively connected to the Framer_2 409a and the FE 407a in the packet switching board 402a. Connection between the Framer_2 409a and the FAP _2 408a is used for service data transmission, and connection between the FAP_2 408a and the FE 407a, is applicable for both service data transmission and control signaling transmission.

In the example embodiment of the present disclosure, using the FPGA_1 of the service board A, reading and writing of the execution state of the G.HAO protocol may be performed in the Framer_1, and the state may be encapsulated into a message format that is supported by the FAP and then transmitted to the service board B via the FAP and the FE.

Fig. 5B is a schematic diagram of service adjustment interaction provided by Example Embodiment six of the present disclosure. As shown in Fig. 5B, a service board A 401a includes a first OTN service processing module (Framer_1) 404a, a first packet switching access module (FAP_1) 405a and a first programmable logic module (FPGA_1) 406a. In this case, ends of the Framer_1 404a are respectively connected to the FPGA_1 406a and the FAP_1 405a, ends of the FPGA_1 406a are respectively connected to the Framer_1 404a and the FAP_1 405a, and ends of the FAP_1 405a are respectively connected to the Framer_1 404a and a packet switching module (FE) 407a in a packet switching board.

The packet switching board 402a includes the FE 407a, ends of which are respectively connected to the FAP_1 405a in the service board A 401a and a second packet switching access module (FAP 2) 408a in a service board B 402a.

The service board B 403a includes a second OTN service processing module (Framer_2) 409a, a FAP 2 408a, and a second programmable logic module (FPGA 2) 410a. In this case, ends of the Framer_2 409a are respectively connected to the FAP_2 408a and the FPGA_2 410a, ends of the FPGA_2 409a are respectively connected to the Framer_2 409a and the FAP_2 408a, and ends of the FAP_2 408a are respectively connected to the Framer_2 409a and the FE 407a in the packet switching board 402a.

In the example embodiment of the present disclosure, the process of sending a configuration message from the service board A 401a to the service board B 403a is shown as the thin dotted line 411b in Fig. 5B, in which the Framer_1 404a of the service board A 401a is configured to implement related content of the G.HAO Protocol, then the FPGA_1 406 performs reading and writing of an execution state of the G.HAO protocol in the Framer_1 404a and encapsulates the state into a message format that is supported by the FAP and inputs the encapsulated state to the FAP_2 408a in the service board B 403a through the FAP_1 405a and the FE 407a, and the FAP_2 408a sends the state to the Framer_2 409a via the FPGA_2 410a.

Responsively, the process that the service board B 403a receives the encapsulated state and returns a response message to the service board A 401a is shown as the bold dash line 412b in Fig. 5B, in which the Framer_2 409a in the service board B 403a receives the state sent by the service board A and then sends a response message to the FAP 2 408a via the FPGA 2 410a, the response message is then sent to the FAP_1 in the service board A through the FAP_2 and the FE, and FAP_1 405a sends the response message to the Framer_1 404a via the FPGA_1 406a.

The example embodiment of the present disclosure is based on the existing packet switching OTN equipment of an operator's existing network, and the support for the G.HAO protocol can be realized on the basis of the existing equipment, such as the Framer, the FAP and the FE by upgrading the software version, thereby reducing the operation and maintenance cost.

### Example Embodiment Seven

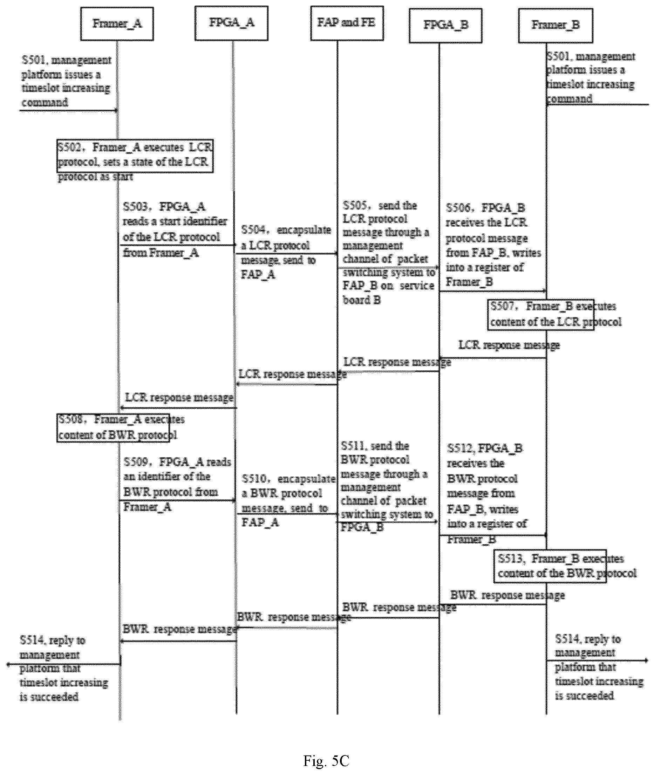

An example embodiment of the present disclosure provides a method for increasing timeslot of an ODUflex (GFP) service. Fig. 5C is a schematic diagram of an adjustment process which enables timeslot increasing of an ODUflex (GFP) service according to Example Embodiment seven of the present disclosure. As shown in Fig. 5C, the process includes the following steps.

In step S501, a management platform issues a timeslot increasing command to a service board A and a service board B.

Here, the management platform is responsible for configuration of an entire system, collection and reporting of system data, and operations of terminating or starting a program in response to user input or other application messages.

When expansion of service is needed by a customer, the management platform is employed to configure and issue an operation instruction of increasing timeslot in an ODUflex (GFP) service, and to issue operation instructions to Framer of OTN service boards at a sending end and a receiving end. In the example embodiment of the present disclosure, the OTN service boards at the sending end and the receiving end correspond to a service board A and a service board B, respectively.

In this case, the service board A starts performing step S502 once the operation instruction of increasing timeslot is received, and the service board B prepares to receive a control signaling sent by the service board A after receiving the operation instruction of increasing timeslot.

In step S502, a Framer on the service board A (Framer A) executes a link connection resize (LCR) protocol, and sets a state of the LCR protocol as *start.*

Here, after the Framer (Framer A) on the service board A at the service sending end receives a configuration command of the management platform, the Framer_A on the service board A starts to execute the LCR protocol, sets the state of the LCR protocol as *start,* and informs a FPGA on the service board A (FPGA _A) by writing a register thereof. In this case, the state of the LCR protocol may be that the LCR protocol is executing, starts to execute, or is in a running process.

In step S503, the FPGA_A reads a *start* identifier of the LCR protocol from the Framer_A.

Here, the FPGA A reads the *start* identifier of the LCR protocol from the Framer_A, and determines that the LCR protocol has started running.

In step S504, a LCR protocol message is encapsulated, and the encapsulated LCR protocol message is sent to a FAP module on the service board A (FAP A).

Here, the FPGA_A of the service board A at the sending end reads a register of the Framer_A and finds that the LCR protocol of the G.HAO protocol has started running, it then encapsulates the LCR protocol message into a corresponding control message, and sends the encapsulated LCR protocol message to the FAP _A, and sends the encapsulated control message to a FE module on a packet switching board through a management channel of a packet switching system between the FAP A and the FE. In this case, the LCR protocol message is in a state that the LCR protocol starts, that is, a control signaling corresponding to a time of the LCR protocol starting running. The management channel of the packet switching system is a channel between the FAP and the FE for transmitting a control signaling.

In step S505, the FE on the packet switching board sends the LCR protocol message to a FAP module on the service board B (FAP B).

Here, the FE on the packet switching board forwards, through a management channel of a packet switching system between the FAP_B and the FE, the LCR protocol message received from the FAP _A to the FAP B of the service board B at the receiving end.

In step S506, a FPGA module on the service board B (FPGA_B) receives the LCR protocol message from the FAP_B, and writes the LCR protocol message into a register of a Framer_B.

Here, after receiving the LCR protocol message sent by the FPGA_A of the service board A, the FAP_B at the receiving end forwards the message to the FPGA_B module of the service board B, and the FPGA_B decapsulates the LCR protocol message and writes the decapsulated LCR protocol message to the register of the Framer_B.

In step S507, the Framer B executes content of the LCR protocol.

Here, the FPGA B controls the Framer_B module of the service board B to complete the LCR protocol, and sends through the FPGA_B a response message to the Framer_A of the service board A at the sending end.

In step S508, the Framer _A executes content of the bandwidth resize (BWR) protocol.

Here, after receiving a response of the LCR protocol from the service board B, the service board A at the sending end starts running the BWR protocol and transmits an execution state of the protocol through the FPGA_A.

In step S509, the FPGA_A reads the *start* identifier of the BWR protocol from the Framer A.

Here, the FPGA A reads from the Framer_A the identifier of the BWR protocol and determines that the BWR protocol has started running.

In step S510, a BWR protocol message is encapsulated, and the encapsulated BWR protocol message is sent to the FAP_A on the service board A.

Here, the FPGA_A of the service board A at the sending end reads a register of Framer_A and finds that the BWR protocol of the G.HAO protocol has started running, it then encapsulates the BWR protocol message into a corresponding control message, and sends the encapsulated BWR protocol message to the FAP A, and sends the encapsulated control message to the FE module on the packet switching board through a management channel of the packet switching system between the FAP _A and the FE. In this case, the BWR protocol message is in a state that the BWR protocol starts, that is, a control signaling corresponding to a time of the BWR protocol starting running.

In step S511, the FE on the packet switching board sends the BWR protocol message to the FAP module on the service board B (FAP B).

Here, the FE on the packet switching board forwards, through a management channel of the packet switching system between the FAP_B and the FE, the BWR protocol message received from the FAP _A to the FAP B at the receiving end.

In step S512, the FPGA_B on the service board B receives the BWR protocol message from the FAP B, and writes the BWR protocol message into a register of the Framer B.

Here, after receiving a state message of the BWR protocol sent by the FPGA_A of the service board A, the FAP_B at the receiving end forwards the message to the FPGA_B module of the service board B, and the FPGA_B decapsulates the BWR protocol message and writes the decapsulated BWR protocol message into the register of the Framer B.

In step S513, the Framer B executes content of the BWR protocol.

Here, the FPGA_B controls the Framer B module on the service board B to complete the BWR protocol, and sends through the FPGA B a response message to the Framer_A of the service board A at the sending end.

In step S514, the service board A and the service board B reply to the management platform that timeslot increasing is succeeded.

Here, after the service board A at the sending end receives the response message of the BWR protocol from the service board B, the service board A and the service board B complete the entire operation of timeslot increasing, and report to the management platform that operation of timeslot increasing is completed.

### Example Embodiment Eight

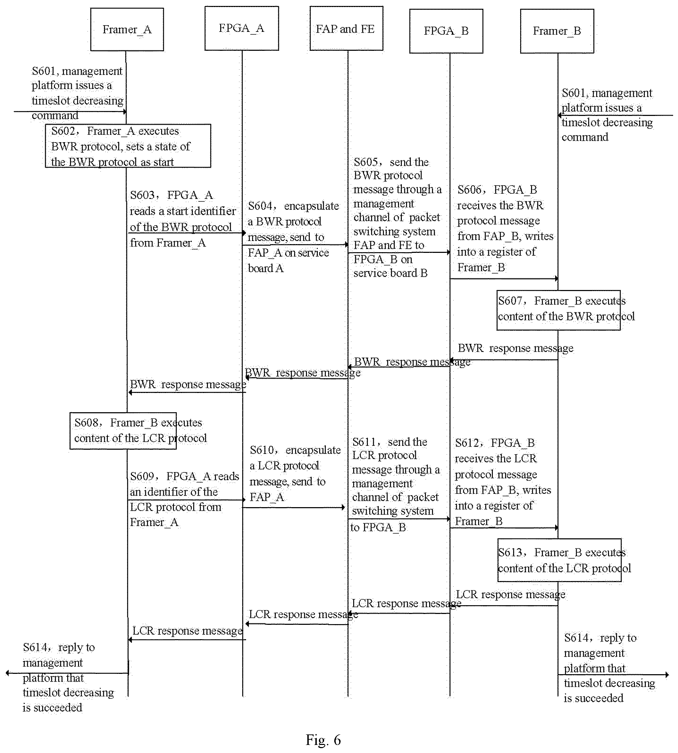

An example embodiment of the present disclosure provides a method for decreasing timeslot of an ODUflex (GFP) service. Fig. 6 is a schematic diagram of an adjustment process which enable timeslot decreasing of an ODUflex (GFP) service according to Example Embodiment eighth of the present disclosure. As shown in Fig. 6, the process includes the following steps.

In step S601, a management platform issues a timeslot decreasing command to a service board A and a service board B.

Here, the management platform is responsible for configuration of an entire system, collection and reporting of system data, and operations of terminating or starting a program in response to user input or other application messages.

When reduction of service is needed by a customer, the management platform is employed to configure and issue an operation instruction of decreasing timeslot in an ODUflex (GFP) service, and to issue operation instructions to OTN service boards at a sending end and a receiving end. In the embodiment of the present disclosure, the OTN service boards at the sending end and the receiving end correspond to a service board A and a service board B, respectively.

In this case, the service board A starts performing step S602 once the operation instruction of increasing timeslot is received, and the service board B prepares to receive a control signaling sent by the service board A after receiving the operation instruction of decreasing timeslot.

In step S602, a Framer on the service board A (Framer A) executes a BWR protocol, and sets a state of the BWR protocol as *start.*

Here, after the service board A at the service sending end receives a configuration command of the management platform, the Framer_A on the service board A starts executing the BWR protocol, sets the state of the BWR protocol as *start,* and informs a FPGA on the service board A (FPGA A) by writing a register thereof. In this case, the state of the BWR protocol may be that the BWR protocol is executing, starts to execute, or is in a running process.

In step S603, the FPGA_A reads a *start* identifier of the BWR protocol from the Framer A.

Here, the FPGA A reads the *start* identifier of the LCR protocol from the Framer_A, and determines that the BWR protocol has started running.

In step S604, a BWR protocol message is encapsulated, and the encapsulated BWR protocol message is sent to a FAP module on the service board A (FAP A).

Here, the FPGA_A of the service board A at the sending end reads a register of the Framer_A and finds that the BWR protocol of the G.HAO protocol has started running, it then encapsulates the BWR protocol message into a control message having a corresponding form, and sends the encapsulated BWR protocol message to the FAP A, and sends the encapsulated BWR protocol message to a FE module on a packet switching board through a management channel of a packet switching system between the FAP A and the FE. In this case, the encapsulated BWR protocol message is in a state that the BWR protocol starts, that is, a control signaling corresponding to a time of the LCR protocol starting running. The management channel of the packet switching system is a channel between the FAP and the FE for transmitting a control signaling.

In step S605, the FE on the packet switching board sends the BWR protocol message to a FAP_B on the service board B.

Here, the FE on the packet switching board forwards, through a management channel of a packet switching system between the FAP_B and the FE, the BWR protocol message received from the FAP A to the FAP_B on the service board B at the receiving end.

In step S606, a FPGA_B on the service board B receives the BWR protocol message from the FAP_B and writes the BWR protocol message into a register of a Framer_B.

Here, after receiving the BWR protocol message sent by the service board A, the FAP_B module on the service board B at the receiving end forwards the message to the FPGA_B module on the service board B, and the FPGA_B decapsulates the BWR protocol message and writes the decapsulated BWR protocol message to the register of the Framer B.

In step S607, the Framer B executes content of the BWR protocol.

Here, the FPGA_B informs the Framer_B on the service board B to complete the BWR protocol, and sends through the FPGA_B a response message to the Framer_A on the service board A at the sending end.

In step S608, the Framer_A executes content of the LCR protocol.

Here, after receiving a response of the BWR protocol from the service board B, the service board A of the sending end starts running the LCR protocol and transmits an execution state of the protocol through the FPGA_A.

In step S609, the FPGA_A reads the *start* identifier of the LCR protocol from the Framer_A.

Here, the FPGA_A reads the identifier of the LCR protocol from the Framer_A and determines that the LCR protocol has started running.

In step S610, a LCR protocol message is encapsulated, and the encapsulated LCR protocol message is sent to the FAP A on the service board A.

Here, the FPGA_A of the service board A at the sending end reads a register of Framer_A and finds that the LCR protocol of the G.HAO protocol has started running, it then encapsulates the LCR protocol message into a corresponding control message, and sends the encapsulated LCR protocol message to the FAP A, and sends the encapsulated control message to the FE module on the packet switching board through a management channel of the packet switching system between the FAP_A and the FE. In this case, the LCR protocol message is in a state that the LCR protocol starts, that is, a control signaling corresponding to a time of the LCR protocol starting running.

In step S611, the FE on the packet switching board sends the LCR protocol message to the FAP_B on the service board B.

Here, the FE on the packet switching board forwards, through a management channel of the packet switching system between the FAP_B and the FE, the LCR protocol message received from the FAP_A to the FAP_B on the service board B at the receiving end.

In step S612, the FPGA_B on the service board B receives the LCR protocol message from the FAP_B, and writes the LCR protocol message into a register of the Framer_B.

Here, after receiving a state message of the LCR protocol sent by the FPGA_A of the service board A, the FAP_B at the receiving end forwards the message to the FPGA_B module of the service board B, and the FPGA_B decapsulates the LCR protocol message and writes the decapsulated LCR protocol message into the register of the Framer B.

In step S613, the Framer_B executes content of the LCR protocol.

Here, the FPGA_B controls the Framer B module on the service board B to complete the LCR protocol, and sends through the FPGA B a response message to the Framer A on the service board A at the sending end.

In step S614, the service board A and the service board B reply to the management platform that timeslot decreasing is succeeded.

Here, after the service board A at the sending end receives the response message of the LCR protocol from the service board B, the service board A and the service board B complete the entire operation of timeslot decreasing, and report to the management platform that operation of timeslot decreasing is completed.

### Example Embodiment Nine

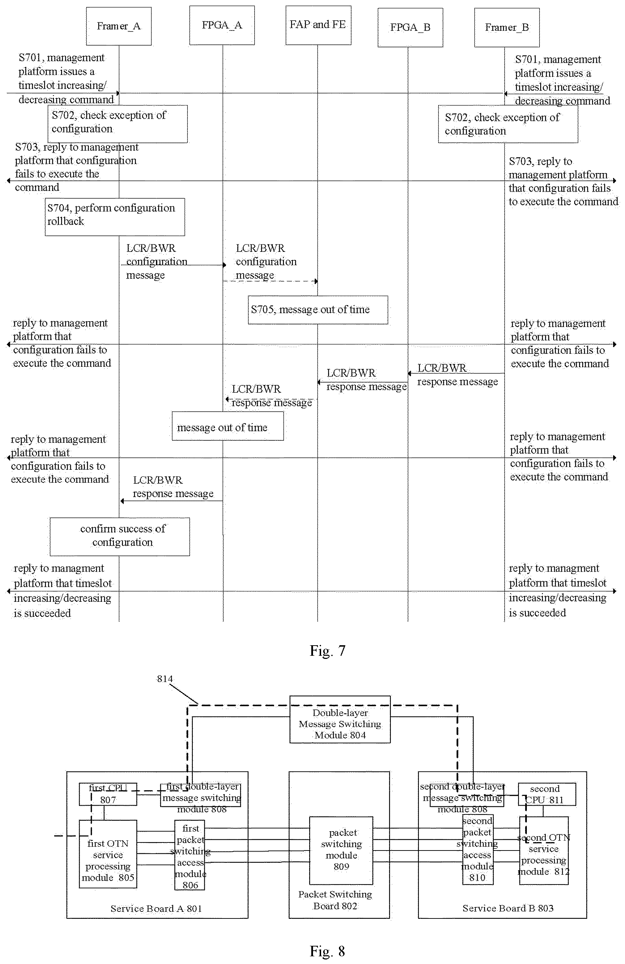

An example embodiment of the present disclosure provides a method for implementing exception handling of an ODUflex (GFP) service. Fig. 7 is a schematic diagram of a process of implementing exception handling of an ODUflex (GFP) service according to Example Embodiment nine of the present disclosure. As shown in Fig. 7, the process includes the following steps.

In step S701, a management platform issues a timeslot increasing or decreasing command to a service board A and a service board B.

In step S702, the service board A and the service board B check whether the configuration is abnormal.

Here, the service boards A and B at both the sending end and the receiving end respectively check whether a conflict occurs between the command issued by the management platform and a current state of the service board.

In step S703, if so, execution failure of the protocol is replied to the management platform.

Here, there may be a conflict which is against the command issued by the management platform while a service board is executing other commands. Execution failure of the protocol is replied to the management platform in a case that the current state of the service board conflicts with the commands issued by the management platform.

In the example embodiment of the present disclosure, if there is no conflict, the service board A and the service board B verify that the command from the management platform is normal, start to execute the LCR protocol and the BWR protocol according to Example Embodiments seven and eight, and send a message to a recipient through a switching system of the FAP and the FE.

In step S704, configuration rollback is performed.

Here, after receiving a response of execution failure, the management platform re-issues to the service board A and the service board B a state as it was before changes, and restores the configuration of the service boards as it was before the command is issued, and complete rollback of state. In other words, when a program or data is processed with an error, the program or data is restored to the last correct state.

In step S705, a time-out is judged, that is, whether a recipient has not received the message within a specified duration.

Here, after receiving a protocol adjustment command from the management platform, the service board A and the service board B respectively start a timer on their own board, and reply to the management platform with a protocol execution failure message when the message receiver fails to receive the message within a duration specified by the timer. After the management platform receives the execution failure message, it reissues the service board A and service board B a state as before the protocol executed, restores the configuration of the service boards as before the command is issued, and thus completes rollback of state. In other words, when a program or data is processed with an error, the program or data is restored to the last correct state. This is undergone until the management platform is replied with success of timeslot increasing/decreasing.

The example embodiment of the present disclosure realizes an out-of-band transmission of the control signaling of the G.HAO protocol by using the auxiliary equipment, such as the FPGA, the FAP and the FE, and realizes support for the G.HAO protocol by upgrading the software version on the basis of the existing equipment, thereby reducing the operation and maintenance cost.

### Example Embodiment Ten

In an example embodiment of the present disclosure, an out-of-band transmission of the G.HAO protocol is implemented through a central processing unit (CPU) and a double-layer switching technology. Example Embodiment eighth of the present disclosure is on the basis of Example Embodiment six, and realizes the out-of-band transmission of the G.HAO protocol by replacing the FPGA, FAP and FE modules in Embodiment one of the present disclosure with a CPU and a double-layer message switching (L2 SWITCH) module.

Fig. 8 is a schematic diagram of the structure of function composition modules which implements a G.HAO protocol interaction method according to Example Embodiment ten of the present disclosure. As shown in Fig. 8, the structure of the composition modules includes a service board A 801, a packet switching board 802, a service board B 803 and a double-layer message switching module (L2 SWITCH) 804.

In the example embodiment of the present disclosure, the service board A 801 includes a first OTN service processing module (Framer_1) 805, ends of which are respectively connected to a first packet switching access module (FAP_1) 806 and a first central processing unit (CPU_1) 807; the CPU_1 807, ends of which are respectively connected to the Framer 1 805 and a first double-layer message switching module (L2 SWITCH_1) 808; the L2 SWITCH_1 808, ends of which are respectively connected to the CPU_1 807 and the L2 SWITCH 804; and the FAP_1 806, end of which are respectively connected to the Framer_1 805 and a packet switching module (FE) 809.

The packet switching board 802 includes the FE 809, ends of which are respectively connected to the FAP_1 80 in the service board A 801 and a second packet switching access module (FAP 2) 810 in the service board B 803.

The service board B 803 includes a second OTN service processing module (Framer_2) 812, ends of which are respectively connected to the second packet switching access module (FAP_2) 810 and a second central processing unit (CPU_2) 811; the CPU_2 811, ends of which are respectively connected to the Framer_2 812 and a second double-layer message switching module (L2 SWITCH 2) 813; L2 SWITCH 2 813, ends of which are respectively connected to the CPU_2 811 and the L2 SWITCH 804; and the FAP 2 810, ends of which are respectively connected to the Framer _2 812 and the FE 809.

In the example embodiment of the present disclosure, the process of sending a configuration message from the service board A to the service board B is shown as the dotted line 814 in Fig. 8, in which is: the Framer_1 in the service board A is configured to implement related content of the G.HAO protocol, and then encapsulate by the CPU_1 a state that the LCR protocol starts into a double layer message having a specific format, and send through the L2 SWITCH_1 on the service board A the encapsulated double layer message having a specific format to the L2 SWITCH to implement a routing-forwarding. In this way, a message of the state of the LCR protocol on the service board A is sent to the CPU_2 of the service board B at a receiving end.

The example embodiment of the present disclosure is based on the existing packet switching OTN equipment of an operator's existing network, and the support for the G.HAO protocol can be realized on the basis of the existing equipment, such as the Framer, the FAP and the FE by upgrading the software version, thereby reducing the operation and maintenance cost.

### Example Embodiment Eleven

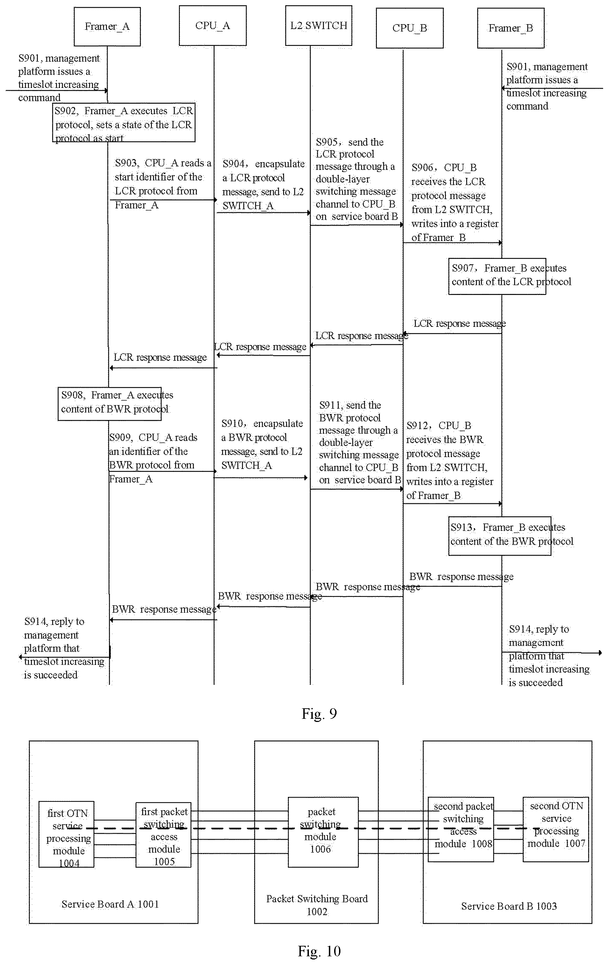

An example embodiment of the present disclosure provides a method for increasing timeslot of an ODUflex (GFP) service. Fig. 9 is a schematic diagram of an adjustment process which enables timeslot increasing of an ODUflex (GFP) service according to Example Embodiment eleven of the present disclosure. As shown in Fig. 9, the process includes the following steps.

In step S901, a management platform issues a configuration command of timeslot increasing to a service board A and a service board B.

Here, a customer employs the management platform to configure and issues an operation instruction of increasing timeslot in an ODUflex (GFP) service, and to issue operation instructions to Framer of OTN service boards at a sending end and a receiving end. In the example embodiment of the present disclosure, the OTN service boards at the sending end and the receiving end correspond to the service board A and the service board B, respectively.

In step S902, a Framer of the service board A (Framer A) executes the LCR protocol, and sets a state of the LCR protocol as *start.*

Here, after the service board A at the service sending end receives a configuration command of the management platform, the Framer A starts to execute the LCR protocol, and sets the state of the LCR protocol as *start.*

In step S903, a CPU (CPU A) on the service board A reads a *start* state identifier of the LCR protocol from a register of the Framer_A.

In step S904, a LCR protocol message is encapsulated and sent to a double-layer switching chip on the service board A (L2 SWITCH_A).

Here, the CPU A on the service board A encapsulates a state that the LCR protocol starts into a double-layer message having a specific format, and sends the encapsulated LCR protocol message through the double-layer switching chip on the service board A (L2 SWITCH_A) to a double-layer switching chip (L2 SWITCH) to implement a routing-forwarding. In this case, the LCR protocol message is in a state that the LCR protocol starts, that is, a control signaling corresponding to a time of the LCR protocol starting running.

In step S905, the L2 SWITCH sends the LCR protocol message to a CPU on the service board B (CPU_B) through a double-layer switching message channel.

Here, the L2 SWITCH is employed to forward the message through the double-layer switching message channel so that the state message of the LCR protocol on the service board A is sent to the CPU B of the service board B at the receiving end.

In step S906, the CPU B receives the LCR protocol message from the L2 SWITCH, and writes the LCR protocol message into a register of a Framer_B.

Here, after receiving the LCR protocol message sent from a FPGA A of the service board A, the L2 SWITCH_B at the receiving end forwards the message to the CPU B module of the service board B, and the CPU B decapsulates the LCR protocol message and writes the decapsulated LCR protocol message to the register of the Framer B.

In step S907, the Framer_B executes the content of the LCR protocol.

Here, the CPU_B on the service board B receives the LCR protocol message of the service board A, and notifies the Framer_B on the service board B to complete the processing of the LCR protocol by writing the register. After the Framer B completes the processing, the CPU B sends, via the L2 SWITCH, to the CPU A of the service board A a double-layer switching response message that execution is completed.

In step S908, the Framer _A executes content of the BWR protocol content.

Here, after receiving from the service board B the response message that execution is completed, the CPU A on the service board A notifies the Framer_A to start executing the BWR protocol.

In step S909, the CPU_A on the service board A reads a *start* state identifier of the BWR protocol from a register of the Framer_A.

In step S910, a BWR protocol message is encapsulate and sent to the L2 SWITCH_A.

Here, the CPU_A on the service board A encapsulates a state that the BWR protocol starts into a double-layer message having a specific format, and sends it through the double-layer switching chip on the service board A (L2 SWITCH_A) to the double-layer switching chip (L2 SWITCH) to implement a routing-forwarding.

In step S911, the L2 SWITCH sends the BWR protocol message to the CPU_B on the service board B through a double-layer switching message channel.

Here, the L2 SWITCH forwards the message through the double-layer switching message so that the state message of the BWR protocol on the service board A is sent to the CPU_B of the service board B at the receiving end.

In step S912, the CPU_B receives the BWR protocol message from the L2 SWITCH, and writes the message of the BWR protocol into a register of the Framer_B.

Here, after receiving the state message of the BWR protocol sent from the FPGA_A of the service board A, the L2 SWITCH_B at the receiving end forwards the message to the CPU_B module of the service board B and writes it to the register of the Framer_B.

In step S913, the Framer_B executes the content of the BWR protocol.

In step S914, the service board A and the service board B reply to the management platform that timeslot increasing is succeeded.

Here, the CPU_B on service board B receives the BWR protocol message of the service board A, and notifies the Framer_B on the service board B to complete the processing of the BWR protocol by writing the register. When receiving a BWR response message from the Framer B, the Framer_A replies to the management platform that timeslot increasing is completed.

### Example Embodiment Twelve

In an example embodiment of the present disclosure, a method for implementing an in-band transmission of a control signaling of the G.HAO protocol by using protocol overhead of an optical digital unit (ODU) service is provided. The G.HAO protocol in-band transmission control method according to the example embodiment of the present disclosure my directly insert a control signaling of the G.HAO protocol into the control overhead of the ODU to perform transmission, thereby enabling adjustment of the LCR protocol and the BWR protocol.

Fig. 10 is a schematic diagram of the structure of the function composition modules which implements a G.HAO protocol interaction method according to Example Embodiment twelve of the present disclosure. As shown in Fig. 10, the structure of the composition modules includes a service board A 1001, a packet switching board 1002, and a service board B 1003.

In the example embodiment of the present disclosure, the service board card A 1001 includes a service processing module (Framer_1) 1004 and a first packet switching access module (FAP_1) 1005. In this case, the Framer_1 1004 is connected to the FAP_1 1004, and ends of the FAP_1 1005 are respectively connected to the Framer_1 1004 and a packet switching module (FE) 1006 of the packet switching board 1002.

The packet switching board 1002 includes the FE 1006, ends of which are respectively connected to the FAP_1 1005 of the service board A 1001 and a second packet switching access module (FAP 2) 1007 of the service board B 1003.

The service board B 1003 includes a service processing module (Framer_2) 1008 and the second packet switching access module (FAP 2) 1007. In this case, the Framer_2 1008 is connected with the FAP_2 1007, and ends of the FAP_2 1007 are respectively connected to the Framer_2 1008 and the packet switching module (FE) 1006 of the packet switching board 1002.

In the example embodiment of the present disclosure, the process of sending a configuration message from the service board A to the service board B is shown as the dotted line 1010 in Fig. 10, in which the Framer_1 of the service board A is configured to implement related content of the G.HAO protocol, then inputs an execution state of the G.HAO protocol of the Framer_1 to the FAP_2 of the service board B through the FAP_1 and the FE, and the FAP_2 sends the state to the Framer_2.

### Example Embodiment Thirteen

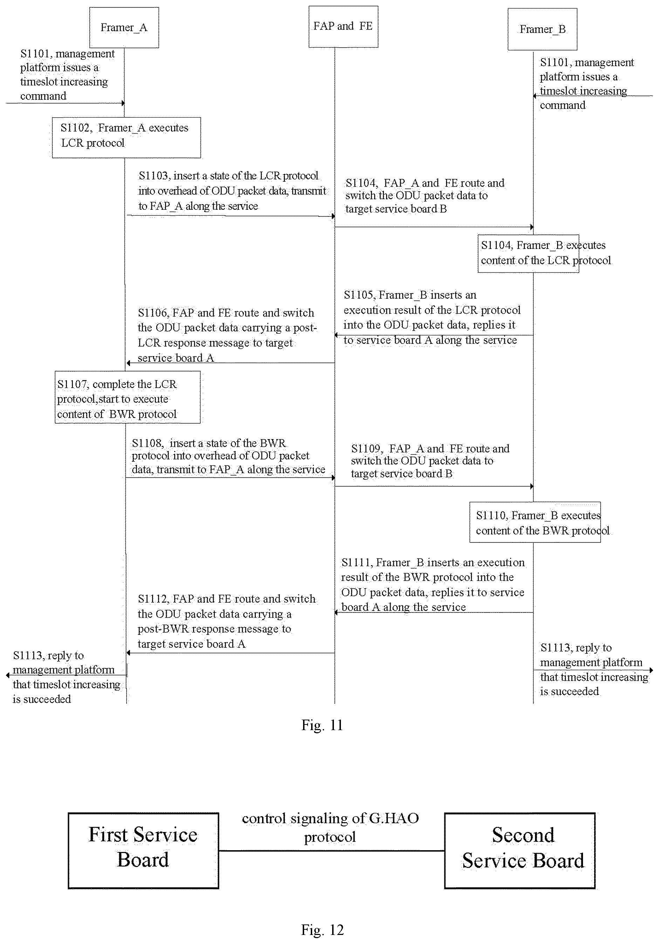

In an example embodiment of the present disclosure, a method for increasing timeslot of an ODUflex (GFP) service is provided. Fig. 11 is a schematic diagram of an adjustment process which implements timeslot increasing of an ODUflex (GFP) service according to Example Embodiment thirteen of the present disclosure. As shown in Fig. 11, the process includes the following steps.

In step S1101, a management platform issues a timeslot increasing command to a service board A at a sending end and a service board B at a receiving end.

In step S1102, a Framer _A executes the LCR protocol.

In step S1103: a state of the LCR protocol is inserted into overhead of ODU packet data, and is transmitted to a FAP A along the service.

Here, the Framer_A on the service board A starts executing the LCR protocol, and inserts the state of the LCR protocol into overhead fields of the ODU. The Framer A inserts the state of the LCR protocol into the overhead fields of the ODU packet data, and transmits it to the FAP_A along with the service data. The overhead fields are the ones that can carry a control signaling, and may be null bytes in a frame in an array or other fields used to carry a control signaling.

In step S1104, the FAP A and a FE route and switch the ODU packet data to the target service board B.

Here, the FAP A on the service board A sends the ODU packet data carrying the state of the LCR protocol to a FE of a packet switching board to execute packet-forwarding, and then forwards the data to the FAP_B module of the service board B. The FAP_B module of the service board B sends the received ODU packet data having the state of the LCR protocol to a Framer_B.

In step S1104, the Framer_B executes content of the LCR protocol.

In step S1105, the Framer_B completes the processing of the LCR protocol, and inserts an execution result of the LCR protocol into the ODU packet data sent to the service board A.

In step S1106, the FAP and the FE route and switch the ODU packet data carrying a post-LCR response message to the target service board A.

In step S1107, the Framer_A on the service board A start executing the BWR protocol.

Here, after receiving the ODU packet data carrying the execution result of the LCR protocol, the service board A completes the process of the LCR protocol and starts to execute the following BWR protocol.

In step S1108: a state of the BRW protocol is inserted into the overhead of the ODU packet data, and is transmitted to the FAP A along the service.

Here, the Framer_A inserts the state of the BWR protocol into overhead fields of the ODU service packet data, and transmits it to the FAP A along with the service data.

In step S1109, the FAP and the FE route and switch the ODU service packet data to the target service board B.

Here, the FAP A on the service board sends the ODU packet data carrying the state of the BWR protocol to the FE of the packet switching board to execute packet-forwarding, and then forwards the data to the FAP_B module of the service board B. The FAP_B module of service board B sends the received ODU service packet data having the state of the BWR protocol to the Framer B.

Step S1110, the Framer B executes content of the BWR protocol.

Step S1111, the Framer_B inserts an execution result of the BWR protocol into the ODU service packet data, and replies to the service board A along with the service data.

Here, the Framer B completes the processing of the BWR protocol, and inserts the execution result of the BWR protocol into the ODU packet data sent to the service board A.

In step S1112, the FAP and the FE route and switch the ODU packet data carrying a post-BWR response message to the target service board A.

In step S 1113, after the service board A and the service board B complete an interaction of the BWR protocol, they reply to the management platform that timeslot increasing is completed.

The example embodiment of the present disclosure can preferably solve a current problem that some OTN transmission equipment cannot support hitless scheduling of an ODUflex service. The method provided by the embodiment of the present disclosure is implemented using packet OTN equipment that meets requirements, thereby the cost of operation and maintenance of the packet OTN equipment can be reduced and a smooth upgrade of equipment is achieved.

### Example Embodiment Fourteen

Based on the foregoing embodiments, an example embodiment of the present disclosure provides a service switching device. Modules included in the device and sub-modules included in each of the modules may be implemented through a processor in a server, and may also through a logic circuit. In a process of implementation, the processor may be a central processing unit (CPU), a microprocessor (MPU), a digital signal processor (DSP) or a field programmable gate array (FPGA), etc.

Fig. 12 is a schematic diagram of the composition structure of a service switching device according to Example Embodiment fourteen of the present disclosure. As shown in Fig. 12, the apparatus includes:
a first service board 1201, which is configured to receive an operation instruction sent by a management platform, and further configured to send a control signaling of the G.HAO protocol to a second service board 1202 according to the operation instruction.

In another embodiment, the first service board is further configured to send via a transfer device the control signaling of the G.HAO protocol to the second service board according to the operation instruction.

In this case, the transfer device is configured to forward the control signaling of the G.HAO protocol.

In another embodiment, the first service board is further configured to insert the control signaling of the G.HAO protocol into corresponding fields of service data, and send the service data to the second service board card.

In another embodiment, the first service board includes:
a service processing module, configured to insert the control signaling of the G.HAO protocol into the corresponding fields in the service data, and send the service data to a packet switching access module of the first service board;
the packet switching access module, configured to send the service data to a packet switching access module of a second service board through a packet switching module on a packet switching board.

In another embodiment, the first service board is configured to encapsulate the control signaling of the G.HAO protocol into a corresponding control message. It is also configured to send the control message to the second service board via the transfer device.

In another embodiment, the first service board includes:
a service processing module, configured to send the control signaling of the G.HAO protocol to a programmable logic module of the first service board;
the programmable logic module, configured to encapsulate the control signaling of the G.HAO protocol into a control message which matches with the packet switching access module, and further configured to send, through the packet switching access module of the first service board, the control message to the packet switching module on the packet switching board;
the packet switching module, configured to send the control message to the packet switching access module of the second service board.

In another embodiment, the first service board is configured to encapsulate the control signaling of the G.HAO protocol into a corresponding double-layer message, and it further configured to send the double-layer message to the second service board via the transfer device.

In another embodiment, the first service board includes:
a service processing module, configured to send the control signaling of the G.HAO protocol to a central processing unit of the first service board;
the central processing unit, configured to encapsulate the control signaling into a double-layer message that matches with a double-layer message switching module; and further configured to send the double-layer message to a transfer-used double-layer message switching module through the double-layer message switching module of the first service board;
the transfer-used double-layer message switching module, configured to send the double-layer message to a double-layer message switching module of the second service board.

In anyone of the above embodiments, the apparatus further includes:
a response module, configured to receive for the first service board a response message which is returned by the second service board in response to the control signaling of the G.HAO protocol received from the first service board.

The description in the example embodiments of the device is similar to that of the example embodiments of the method, and may result in a similar beneficial outcome as the method. For technical detail that is not disclosed in the example embodiments of the apparatus, further understanding may be obtained by referring to the description of those example embodiments of the method provided by the present disclosure.

It should be noted that, in the example embodiments of the present disclosure, if the above-mentioned service switching method is implemented in the form of a software functional module and is sold or used as an independent product, the method can also be stored in a computer readable storage medium. Based on this understanding, a portion of the technical solution of the example embodiments of the present disclosure that essentially makes contribution to the prior art can be embodied in the form of a computer software product, which is stored in a storage medium and includes several instructions so that a server can execute all or part of the method described in the various example embodiments of the present disclosure. The aforementioned storage media includes a U disk, a mobile hard disk, a read only memory (ROM), a magnetic disk or an optical disk and other media that can store program codes. In this way, the example embodiments of the present disclosure are not limited to any specific combination of hardware and software.

Correspondingly, an example embodiment of the present disclosure provides a computer-readable storage medium on which a computer program is stored, and the computer program, when is executed by a processor, cause the steps of the service switching method provided in the foregoing example embodiments to be implemented.

Here, it should be noted that the description of the example embodiments of the storage medium and the device is similar to that of the foregoing embodiments of the method, and may results in similar beneficial outcome as the method. For technical detail that is not disclosed in the example embodiments of the storage medium and the device, further understanding may be obtained by referring to the description of those embodiments of the method provided by the present disclosure.

Of course, in the case that the device in the example embodiments of the present disclosure may also have other similar protocol interaction implementation instances, those skilled in the art may perform various relative changes and modifications in according to the example embodiments of the present disclosure without departing from the spirit and the essence of the present disclosure. However, these changes and modifications should fall into the protection scope of the claims attached to the method of the present disclosure.

It shall be appreciated by those skilled in the art that example embodiments of the present disclosure may be provided as a method, a system, or a computer program product. The present disclosure may therefore adopt example embodiments in the form of hardware example embodiments, software example embodiments, or example embodiments combining both software and hardware. Furthermore, the present disclosure may take the form of a computer program product implemented on one or more computer usable storage media (including but not limited to, a magnetic disk memory, an optical memory, etc.) having computer-usable program codes.

The present disclosure is described with reference to flowcharts and/or block diagrams of methods, device (systems), and computer program products according to example embodiments of the present disclosure. It shall be appreciated that each step and/or block in the flowcharts and/or the block diagrams, and combinations of steps/blocks in the flowcharts and/or the block diagrams, can be implemented by computer program instructions. These computer program instructions may be provided to a processor of a general-purpose computer, of a special-purpose computer, of an embedded processor, or of other programmable data processing devices to form a machine such that a device configured to implement functions specified in one or more steps in the flowcharts and/or in one or more blocks in the block diagrams can be formed by way of instructions executed by the processor of the computer or other programmable data processing apparatuses.

These computer program instructions may also be stored in a computer readable memory capable of directing the computer or other programmable data processing apparatuses to function in a particular manner. These computer program instructions stored in the computer readable memory generate a product including an instruction device that implements the functions specified in one or more steps in the flowcharts and/or in one or more blocks in the block diagrams.

These computer program instructions may also be loaded onto a computer or other programmable data processing apparatuses such that a series of operational steps are performed on the computer or other programmable apparatuses to produce a computer-implemented process, such that the instructions executed on the computer or other programmable apparatuses provide steps for implementing the functions specified in one or more steps in the flowcharts and/or one or more blocks in the block diagrams.

It should be understood that "one example embodiment" or "an example embodiment" mentioned throughout the description means that specific features, structures or characteristics related to example embodiments are included in at least one example embodiment of the present disclosure. Therefore, respective wordings of "one example embodiment" or "an example embodiment" mentioned throughout the description do not necessarily refer to the same example embodiment. In addition, these specific features, structures or characteristics can be combined in any suitable manner in one or more example embodiments. It should be understood that, in various example embodiments of the present disclosure, serial numbers of the above respective processes do not mean an implementation order, and the implementation order of the respective processes should be determined by functions limitation to the implementation process of the embodiments of the present disclosure. The serial numbers of the above example embodiments of the present disclosure are only used for description, and do not represent any preference for an example embodiment.

It should be noted that, it is intended to cover a non-exclusive inclusion by the term "include", "including", or any other variation herein. Therefore, a process, a method, an article, or a device that includes a series of elements not only includes the series of elements but also includes other elements that are not listed explicitly or elements that are inherent to such a process, a method, an article, or a device. Without further limitations, when an element is defined by a wording of "include a ...", it does not exclude presence of a same element in the process, the method, the article, or the device that includes this element.

In several example embodiments provided by the present disclosure, it should be understood that the disclosed device and method may be implemented in other manners. The example embodiments of the device described above are only schematic. For example, division of modules is only partition by logic functions. In actual implementation, other manners of division may be used. For example, multiple modules or components may be combined or may be integrated into another system, or some features may be omitted or may not be executed. In addition, some interfaces may be used for coupling, or direct coupling, or communication connection between components shown or discussed, and indirect coupling or communication connection between devices or modules may be electrical, mechanical, or in other manners.

The modules described above as separate components may be or may not be physically separated, and the components shown as modules may be or may not be physical modules. The components may be located in one place or may be distributed on multiple network modules. Some or all of the modules may be selected according to actual needs to achieve the purpose of the solution of the embodiments.

In addition, respective functional modules in respective example embodiments of the present disclosure may all be integrated into one processing module; or respective modules may be taken separately as one module; or two or more modules may be integrated into one module. The above integrated modules may be implemented in a manner of hardware, or may be implemented in a manner of hardware plus software functional modules.

It should be understood by those ordinary skilled in the art that: all or some steps for implementing embodiments of the method described above may be completed by means of hardware associated with instructions of a program which may be stored in a computer readable storage medium, and when the program is executed, steps including the example embodiments of the method described above are executed; and the aforementioned storage medium includes a medium which may store program codes, such as a removable storage device, a read only memory (ROM), a magnetic disk, or an optical disk.

Alternatively, the above-described integrated modules of the present disclosure may be stored in a computer readable storage medium if it is implemented in the form of a software function module and is sold or used as a separate product. Based on such understanding, the essence of the technical solutions of the embodiments of the present disclosure or the portion of contribution to existing technologies thereof may be embodied in the form of a software product. The computer software product is stored in a storage medium, and includes several instructions which enable one server to perform all or part of the method described in respective example embodiments of the present disclosure. The aforementioned storage medium includes various mediums that can store program codes, such as a removable storage device, an ROM, a magnetic disk, or an optical disk.

The above descriptions are only exemplary implementation of the present disclosure, but the protection scope of the present disclosure is not limited herein. Variations or substitutions that can be easily thought of by one skilled in the art based on the technical scope disclosed in the present disclosure should all be covered in the protection scope of the present disclosure. Therefore, the protection scope of the present disclosure should be confined to the protection scope of the claims.

## Claims

1. A service switching method, the method comprises steps of:
receiving, by a first service board, an operation instruction sent by a management platform; and
sending, by the first service board, a control signaling of a Hitless Adjustment of Flexible rate Optical Digital Unit (Generic Framing Procedure), G.HAO, protocol to a second service board according to the operation instruction.

2. The method according to claim 1, wherein sending, by the first service board, a control signaling of G.HAO protocol to a second service board according to the operation instruction comprises:
sending, by the first service board, the control signaling of the G.HAO protocol to the second service board via a transfer device according to the operation instruction,
wherein the transfer device is configured to forward the control signaling of the G.HAO protocol.

3. The method according to claim 1, wherein sending, by the first service board, a control signaling of G.HAO protocol to a second service board according to the operation instruction comprises:
inserting, by the first service board, the control signaling of the G.HAO protocol into corresponding fields in service data according to the operation instruction, and sending the service data to the second service board.

4. The method according to claim 3, wherein inserting, by the first service board, the control signaling of the G.HAO protocol into corresponding fields in service data according to the operation instruction, and sending the service data to the second service board comprises:
Inserting, by a service processing module of the first service board, the control signaling of the G.HAO protocol into the corresponding fields in the service data according to the operation instruction, and sending the service data to a packet switching access module of the first service board; and
sending, by the packet switching access module of the first service board, the service data to a packet switching access module of the second service board through a packet switching module of a packet switching board.

5. The method according to claim 2, wherein sending, by the first service board, the control signaling of the G.HAO protocol to the second service board via a transfer device according to the operation instruction comprises:
encapsulating, by the first service board, the control signaling of the G.HAO protocol into a corresponding control message according to the operation instruction; and
sending, by the first service board, the control message to the second service board via the transfer device.

6. The method according to claim 5, wherein encapsulating, by the first service board, the control signaling of the G.HAO protocol into a corresponding control message according to the operation instruction comprises:
sending, by a service processing module of the first service board, the control signaling of the G.HAO protocol to a programmable logic module of the first service board according to the operation instruction, and encapsulating, by the programmable logic module of the first service board, the control signaling of the G.HAO protocol into a control message which matches with a packet switching access module, and
wherein sending, by the first service board, the control message to the second service board via the transfer device comprises:
sending, by the programmable logic module of the first service board, the control message to a packet switching module of a packet switching board through a packet switching access module of the first service board, and sending, by the packet switching module, the control message to a packet switching access module of the second service board.

7. The method according to claim 2, wherein sending, by the first service board, the control signaling of the G.HAO protocol to the second service board via a transfer device according to the operation instruction comprises:
encapsulating, by the first service board, the control signaling of the G.HAO protocol into a corresponding double-layer message according to the operation instruction; and
sending, by the first service board, the double-layer message to the second service board via the transfer device.

8. The method according to claim 7, wherein encapsulating, by the first service board, the control signaling of the G.HAO protocol into a corresponding double-layer message according to the operation instruction comprises:
sending, by a service processing module of the first service board, the control signaling of the G.HAO protocol to a central processing unit of the first service board according to the operation instruction, and encapsulating, by the central processing unit of the first service board, the control signaling into a double-layer message which matches with a double-layer message switching module, and
wherein sending, by the first service board, the control message to the second service board via the transfer device comprises:
sending, by the central processing unit of the first service board, the double-layer message to a transfer-used double-layer message switching module through a double-layer message switching module of the first service board, and sending, by the transfer-used double-layer message switching module, the double-layer message to a double-layer message switching module of the second service board.

9. The method according to anyone of claims 1 to 8, wherein the method further comprises:
receiving, by the first service board, a response message that is returned by the second service board in response to the control signaling of the G.HAO protocol received from the first service board.

10. A service switching device, the device comprises:
a first service board, configured to receive an operation instruction sent from a management platform, and further configured to send a control signaling of G.HAO protocol to a second service board according to the operation instruction.

11. A computer-readable storage medium on which a computer program is stored, wherein the computer program is configured to implement, when executed, steps in the service switching method of anyone of claims 1 to 9.
